Europäisches Patentamt

**European Patent Office**

**Office européen des brevets**

(11) Numéro de publication: **0 032 410**
**A1**

(12) # DEMANDE DE BREVET EUROPEEN

(21) Numéro de dépôt: **81200015.6**

(22) Date de dépôt: **09.01.81**

(51) Int. Cl.³: **G 07 C 15/00**
**H 04 M 11/00, G 06 F 15/28**

(30) Priorité: **10.01.80 BE 58328**

(43) Date de publication de la demande:
**22.07.81 Bulletin 81/29**

(84) Etats contractants désignés:
**AT CH DE FR GB IT LI LU NL SE**

(71) Demandeur: **De Bruyn, Jacques**
**Blancefloerlaan, 45**
**B-2050 Anvers(BE)**

(72) Inventeur: **De Bruyn, Jacques**
**Blancefloerlaan, 45**
**B-2050 Anvers(BE)**

(74) Mandataire: **Ottelohe, Jozef René**
**Bureau Ottelohe J.R. Postbus 3 Fruithoflaan 105**
**B-2600 Antwerpen (Berchem)(BE)**

(54) Dispositif pour faire, au moyen du téléphone, des mises sur Lotto et sur autres jeux de hasard autorisés.

(57) L'invention se rapporte à un dispositif pour faire, au moyen du téléphone, des mises immédiates et jusqu'à peu de temps avant le tirage des numéros gagnants sur Lotto et sur autres jeux de hasard autorisés.

Sur le central téléphonique (3) de la Régie de Télégraphe et de Téléphone est raccordé au moins un appareil répondeur (8) pour donner les instructions se rapportant au jeu à l'abonné au téléphone qui désire participer au jeu, ainsi qu'un ordinateur central (4) pour l'enregistrement du numéro de téléphone de l'abonné au téléphone, des chiffres ou autres symboles choisis sur lesquels une mise est faite et du montant à porter en compte à l'abonné au téléphone.

- 1 -

Dispositif pour faire, au moyen du téléphone, des mises
sur Lotto et sur autres jeux de hasard autorisés.

L'invention se rapporte à un dispositif pour faire, au
moyen du téléphone, des mises immédiates et jusqu'à peu de
temps avant le tirage des numéros gagnants sur Lotto et
sur autres jeux de hasard autorisés.

Jusqu'à présent il faut, pour participer au jeu du Lotto,
se procurer un formulaire ad hoc chez un agent reconnu, et
remettre ledit formulaire après l'avoir dûment rempli. Par
la suite ces formulaires doivent être vérifiés dans les services du Lotto afin de déterminer les participants gagnants.

Cette manière de procéder a pour inconvénient principal
d'exiger un nombre incalculable de formulaires qui doivent
alors être distribués dans le pays tout entier et que la
limite de participation au jeu se situe à un temps relativement long avant le début du tirage. Un autre inconvénient important est que les handicapés qui n'ont pas la
possibilité de se déplacer, sont dans l'impossibilité de
participer au jeu sans faire appel aux services de tierces
personnes.

Pour rémédier à ces inconvénients on a, conformément à la principale caractéristique de l'invention, réalisé un dispositif par lequel au moins un appareil répondeur se trouve raccordé au central téléphonique de la Régie des Télégraphes et Téléphones en vue de donner des instructions se rapportant au jeu de Lotto à l'abonné au téléphone qui désire participer au jeu, ainsi qu'un ordinateur central pour l'enregistrement du numéro de téléphone de l'abonné au téléphone, des chiffres, lettres ou autres symboles choisis sur lesquels il effectue une mise et du montant qui doit être porté en compte à l'abonné au téléphone.

En dehors du fait de rémédier aux inconvénients précités, ce dispositif présente l'avantage de pouvoir participer au jeu jusqu'à peu de temps, par exemple une heure, avant que ne s'effectue le tirage des numéros gagnants et que même les handicapés qui ont difficile à se déplacer peuvent, au moyen de leur téléphone, participer au jeu. En outre, la participation du réseau téléphonique au jeu du Lotto est tout à l'avantage de la Régie de Télégraphe et de Téléphone. Par l'utilisation du réseau téléphonique, on aura d'ailleurs plus facilement tendance à participer au jeu que par le moyen de formulaires imprimés. C'est ainsi que les participants qui disposent de peu de temps ou qui désirent participer au dernier moment, auront la possibilité de faire leur mise sans grande peine. Ce dispositif permet en outre de n'utiliser qu'un personnel restreint, réduisant ainsi les frais, alors que les participants gagnants peuvent être rapidement désignés et payés. Les frais d'investissement relativement élevés pour la mise en service d'un dispositif conforme à l'invention peuvent être négligés par suite des résultats réalisés. Un autre avantage encore consiste dans le fait que les commissions payées à présent aux dépositaires, pourraient maintenant revenir à l'exploitant du nouveau dispositif selon l'invention.

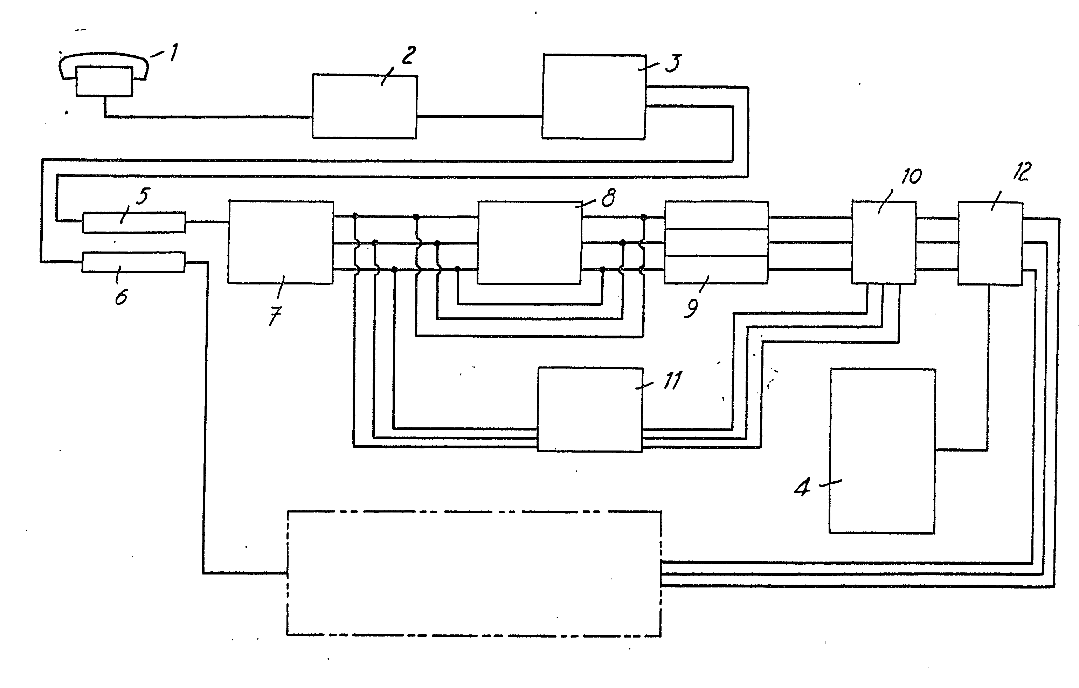

A titre d'exemple, et sans le moindre caractère limitatif, il est donné ci-après une description détaillée d'une forme d'exécution préférée du dispositif conforme à l'invention. Cette description se réfère au dessin annexé qui représente un schéma bloc de ce dispositif.

Pour plus de clarté on n'a représenté au dessin qu'un seul poste téléphonique 1 qui se trouve raccordé de la manière bien connue à un central téléphonique local 2, qui à son tour est raccordé à un central principal 3 utilisé pour le trafic international et sur lequel se trouve raccordé l'enensemble du dispositif d'ordinateur de Lotto décrit ciaprès. Ce dispositif peut consister en plusieurs groupes d'appareillages électroniques composés de manière analogue, dont chacun des groupes est destiné au traitement d'une langue parlée déterminée et sera de préférence raccordé sur un même ordinateur central 4. Dans ce cas il est prévu sur le central principal 3 un dispositif de raccordement 5 et un dispositif de raccordement 6 qui mettent automatiquement en communication les abonnés au téléphone néerlandophones avec le groupe néerlandophone du dispositif d'ordinateur et les abonnés au téléphone francophones avec le groupe francophone du dispositif d'ordinateur. En considérant que, tel que mentionné précédemment, les deux groupes sont composés de la même manière, il n'est donné ci-après que la description d'un seul groupe. Le deuxième groupe est représenté au schéma en lignes point-tirets. Chaque dispositif de raccordement 5, respectivement 6, se trouve raccordé sur ce qui est nommé un appareil PABX 7 qui répartit les communications sur plusieurs lignes téléphoniques, de sorte que la capacité du dispositif s'en trouve considérablement augmentée. Sur les lignes téléphoniques qui en sortent il est raccordé un appareil répondeur téléphonique 8 en vue de donner les instructions voulues à l'abonné au téléphone. Il est raccordé sur chaque ligne téléphonique une mémoire 9 pour l'enregistrement des chiffres de Lotto choisis et du numéro de téléphone de l'abonné. De préférence il sera également prévu dans le groupe une mémoire auxiliaire 10 en vue du contrôle du nombre de mises permises par semaine pour un même joueur. Cette mémoire fonctionne de paire avec un appareil de conversion et de confirmation 11 qui communiquera à l'abonné au téléphone l'éventuel refus d'une mise donnée. Cet appareil de conversion et de confirmation 11 est également prévu pour la conversion en langue parlée des chiffres de Lotto enregistrés dans les mémoires 9 et répète, à titre de contrôle, ces chiffres enregistrés à l'abonné au téléphone. Il est également prévu une unité de lecture 12 en vue de transmettre l'information enregistrée dans les mémoires 9 à l'ordinateur central 4 et pour effacer ensuite l'information introduite.

Le fonctionnement du dispositif décrit ci-dessus se trouve décrit ci-après.

L'abonné au téléphone qui désire participer au jeu, par exemple un jeu de Lotto, décroche le combiné de l'appareil de téléphone 1 et entend la tonalité de sélection. Après avoir sélecté par exemple les chiffres 00 du service automatique international, le raccordement au central principal 3 se trouve réalisé. Dès qu'il entend la tonalité qui précède une communication internationale, l'abonné sélecte un uméro de téléphone attribué au jeu de Lotto, par lequel il sera automatiquement raccordé au dispositif d'ordinateur du Lotto. En supposant que le numéro d'abonné en soit un qui est attribué à un abonné néerlandophone, le dispositif de raccordement 5 raccordera l'abonné au groupe néerlandophone du dispositif et l'appareil PABX 7 établira une connexion avec une ligne libre de l'appareil répondeur 8, qui communiquera par exemple le texte suivant : "Vous êtes raccordé à l'ordinateur central du Lotto national. Vous êtes prié, après le premier signal, de sélecter votre premier chiffre choisi sur votre appareil téléphonique. Après chaque signal vous sélectez dans l'ordre numérique les chiffres suivants. Après sélection de votre dernier chiffre, l'ordinateur vous répétera les chiffres que vous avez choisis. Bonne chance et commencez maintenant". Après que, suite à chaque signal, les chiffres ont été sélectés, les impulsions réalisées par le sélecteur seront converties en langue d'ordinateur dans la mémoire 9, ce qui signifie que les chiffres de Lotto choisis ainsi que le numéro de téléphone de l'abonné sont enregistrés. Simultanément un contrôle est effectué dans la mémoire auxiliaire 10 pour déterminer si le numéro de téléphone de l'abonné n'a pas encore été enregistré pour le jeu de Lotto en cours. Lorsqu'il en est ainsi, il sera communiqué à l'abonné au moyen d'un appareil répondeur raccordé à la mémoire auxiliaire 10 : "Votre mise est refusée vu que vous avez précédemment déjà fait une mise pour participation cette semaine". On évite ainsi que des mises exagérément élevées ne puissent être faites par participant, celles-ci n'étant portées en compte qu'ultérieurement par la Régie de Télégraphe et de Téléphone. Cependant, lorsque la mise est acceptée, l'information est transmise de la mémoire 9 à l'appareil de conversion et de réponse 11, qui convertit l'information en langue parlée et la communique à l'abonné au téléphone, qui peut ainsi contrôler si les chiffres de Lotto qu'il a choisis ont été correctement enregistrés. Ensuite on raccroche le combiné du téléphone de sorte que la communication téléphonique est interrompue. L'appareil de conversion et de réponse 11 peut être de n'importe quel genre et se composer d'une série de commutateurs électroniques, dénommées des portes, et comportant par exemple quarante pistes de bande différentes qui peuvent être introduites une à une selon que ces pistes soient enclenchées par la présélection des portes. Après que le combiné a été raccroché, une impulsion est envoyée à la mémoire 9, qui transmet le numéro de l'abonné et les chiffres de Lotto choisis à l'unité de lecture 12 et à l'ordinateur central 4, où toute l'information est enregistrée sur bande d'ordinateur, après quoi l'unité de lecture efface l'information dans la mémoire 9, dans laquelle se libère alors à nouveau une place pour une nouvelle information. Si l'abonné au téléphone n'est pas d'accord avec les chiffres répétés, il sélectera par exemple sur son appareil téléphonique le chiffre C, ce qui efface l'information contenue dans la mémoire 9 et ne fait pas porter en compte le montant de la mise. Dans ce cas il n'est porté en compte que les frais de la communication téléphonique et l'abonné peut recommencer l'opération.

Les montants des mises peuvent être déterminées d'après le nombre de chiffres choisis et en vue d'éviter des mises exagérément élevées, il existe la possibilité de déterminer un montant maximum lequel, au cas où il serait dépassé, serait refusé par le dispositif d'ordinateur. Le dispositif d'ordinateur pourrait également refuser une mise, lorsque par exemple les chiffres sélectés ne correspondent pas aux chiffres de Lotto autorisés.

Le dispositif décrit ci-dessus identifiera l'abonné et lui portera en compte les frais de communications et de mises sur la note du téléphone qui lui est normalement adressée, avec mention des chiffres de Lotto choisis et du coût de la mise.

En vue de sélectionner les joueurs, la compagnie des téléphones pourrait, si elle le voulait, attribuer à chaque joueur un numéro de code secret, qu'il faudrait alors également sélecter pour être raccordé au dispositif d'ordinateur.

Avant que ne commence le tirage des numéros gagnants, la bande magnétique de l'ordinateur central 4 est scellée et rangée en toute sécurité. Après le tirage, l'ordinateur sera alors programmé avec les numéros gagnants et la bande magnétique y sera passée à grande vitesse. On obtient alors comme résultat sur les documents de l'ordinateur le numéro de téléphone des participants, le nombre et la valeur des chiffres choisis et le montant qui sera porté en compte sur la note de téléphone. Les gagnants de prix seront identifiés et payés au moyen d'un chèque ou de toute autre manière.

Il est bien évident que certains des composants décrits ci-dessus pourraient être remplacés par d'autres qui poursuivent le même but et que d'autres combinaisons des composants décrits seraient également possibles, à condition de ne pas sortir du cadre de la présente invention.

REVENDICATIONS

1.- Dispositif pour faire, au moyen du téléphone, des mises sur Lotto et sur d'autres jeux de hasard autorisés, caractérisé par le fait qu'il se trouve raccordé sur le central téléphonique (3) de la Régie de Télégraphe et de Téléphone au moins un appareil répondeur (8) pour donner les instructions se rapportant au jeu à l'abonné au téléphone qui désire participer au jeu, ainsi qu'un ordinateur central (4) pour l'enregistrement du numéro de téléphone de l'abonné au téléphone, des chiffres ou autres symboles choisis sur lesquels une mise est faite et du montant à porter en compte à l'abonné au téléphone.

2.- Dispositif selon la revendication 1, caractérisé par le fait qu'il se trouve raccordé entre l'appareil répondeur (8) et l'ordinateur central (4) une mémoire (9) pour l'enregistrement temporaire du numéro de téléphone de l'abonné et des chiffres choisis sur lesquels une mise est faite, ainsi qu'un appareil de conversion et de réponse (11) qui convertit l'information enregistrée dans la mémoire (9) en langue parlée et la répète à l'abonné au téléphone.

3.- Dispositif selon la revendication 1, caractérisé par le fait que le dispositif est pourvu d'une mémoire auxiliaire (10) en vue de contrôler le nombre de mises faites pour un même jeu par l'abonné au téléphone.

4.- Dispositif selon les revendications 1 et 2, caractérisé par le fait qu'il est prévu une unité de lecture (12) en vue de transmettre l'information enregistrée dans la mémoire (9) à l'ordinateur central (4) et pour effacer l'information stockée dans ladite mémoire (9).

5.- Dispositif selon la revendication 1, caractérisé par le fait qu'il se trouve raccordé entre le central téléphonique (3) et l'ordinateur central (4) un appareil (7) pour un répartiteur de lignes téléphoniques, chaque ligne téléphonique étant pourvue d'une mémoire (9) pour l'enregistrement temporaire du numéro de téléphone de l'abonné au téléphone et des chiffres choisis sur lesquels une mise est faite.

6.- Dispositif selon la revendication 1, caractérisé par le fait qu'il se trouve raccordé entre le central téléphonique (3) et l'ordinateur central (4), pour chaque langue parlée, un appareil répondeur (8) et un appareil de conversion et de réponse (11) dans la langue en question.

# 0032410

Office européen
des brevets

**RAPPORT DE RECHERCHE EUROPEENNE**

Numéro de la demande

EP 81 20 0015

| Catégorie | Citation du document avec indication, en cas de besoin, des parties pertinentes | Revendication concernée |
|---|---|---|
| | COMPUTER, vol. 7, no. 10, octobre 1974, pages 30-38 Long Beach, U.S.A. S.L. DUNIK: "Large scale off-track betting systems" * Page 33: "Telephone betting operations" * | 1 |
| | MACHINE DESIGN, vol. 43, no. 1, 7 janvier 1971, pages 31,33 S. KLEIN: "Off-track betting is off and running" * Page 33: "Telephone betting"; figures * | 1 |
| | GB - A - 1 351 455 (R.C. FREETHY) * Page 1, ligne 10 - page 2, ligne 14; revendications; figures 1,2 * | 1 |
| A | US - A - 3 909 002 (D. LEVY) * Abrégé; colonne 1, ligne 9 - colonne 4, ligne 26; figure 2 * | 1 |
| PA | GB - A - 2 028 554 (SESAAM) * Abrégé; figure 1; revendications * | 1 |
| A | FR - A - 2 272 703 (P. FISCHER) * Revendications * | 1 |

./.

**DOCUMENTS CONSIDERES COMME PERTINENTS**

**CLASSEMENT DE LA DEMANDE (Int. Cl.³)**

G 07 C 15/00
H 04 M 11/00
G 06 F 15/28

**DOMAINES TECHNIQUES RECHERCHES (Int. Cl.³)**

G 07 C 15/00
H 04 M 11/00
          3/42
G 06 F 15/44
          15/28
G 07 F 17/32

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-04-1981 | DAVID |

OEB Form 1503.1  06.78

# RAPPORT DE RECHERCHE EUROPEENNE

**Office européen des brevets**

EP 81 20 0015
-2-

| Catégorie | DOCUMENTS CONSIDERES COMME PERTINENTS<br>Citation du document avec indication, en cas de besoin, des parties pertinentes | Revendica-tion concernée | CLASSEMENT DE LA DEMANDE (Int. Cl. ³) |
|---|---|---|---|
| A | FR - A - 2 349 899 (SAFAA)<br> * Revendications; figure 1 * | 1 | |
| A | NL - A - 207 573 (T. REUMERMAN)<br> * En entier * | 1,2 | |
| | | | **DOMAINES TECHNIQUES RECHERCHES (Int. Cl. ³)** |

OEB Form 1503.2   06.78